# EUROPÄISCHE PATENTSCHRIFT

(11) **EP 1 305 193 B1**
(45) Veröffentlichungstag und Bekanntmachung des Hinweises auf die Patenterteilung: **21.05.2008**
(21) Anmeldenummer: 01969513.9
(22) Anmeldetag: 25.07.2001
(51) Int. Cl.: B60R 21/34

(54) **BETÄTIGUNGSVORRICHTUNG FÜR EIN BEWEGLICHES ELEMENT**
ACTUATING DEVICE FOR A MOVEABLE ELEMENT
DISPOSITIF D'ACTIONNEMENT POUR ELEMENT MOBILE

(30) Priorität: 01.08.2000 DE 20013256 U
(43) Veröffentlichungstag der Anmeldung: 02.05.2003
(73) Patentinhaber: TR Engineering GmbH, 67433 Neustadt/W. (DE)
(72) Erfinder: DÖHRER, Eckardt, 76835 Flemingen (DE); HOFFMANN, Axel, 67434 Neustadt (Weinstrasse) (DE)
(74) Vertreter: Grünecker, Kinkeldey, Stockmair & Schwanhäusser Anwaltssozietät
(86) Internationale Anmeldenummer: PCT/EP2001/008616
(87) Internationale Veröffentlichungsnummer: WO 2002/009983

(56) Entgegenhaltungen:
- EP-A- 0 529 501
- EP-A- 0 761 505
- DE-A- 2 841 315
- DE-A- 3 908 117
- DE-A- 19 712 961
- DE-A- 19 721 565

## Beschreibung

Die Erfindung betrifft eine Betätigungsvorrichtung mit zwei relativ zueinander bewegbar angeordneten Gehäuseteilen. Insbesondere betrifft die Erfindung eine Betätigungsvorrichtung für ein bewegliches Element mit einem ersten Gehäuseteil und einem an diesem beweglich gelagerten zweiten Gehäuseteil, das in einer Ruhelage durch ein Sperrelement entgegen einer Vorspannung an dem ersten Gehäuseteil gehalten ist, wobei das Sperrelement von einem Auslöseorgan in seiner Sperrposition vorgespannt ist, und das Auslöseorgan in dem zweiten Gehäuseteil aufgenommen wird und durch eine Energieeinrichtung aus der Sperrposition in eine das zweite Gehäuseteil freigebende Entsperrposition bewegbar ist.

In Situationen der Gefahr einer Kollision zwischen Personen und Gegenständen ist es vorteilhaft, eine Vorrichtung zu haben, die, von dementsprechenden Sensoren ausgelöst, in der Lage ist, Verkleidungsteile in eine flexible vorgelagerte Position zu bringen, welche die Personen vor einem harten Auftreffen auf diese Gegenstände schützen.
Ein wesentlicher Teil der kinetischen Energie dieser Personen kann so von den Verkleidungsteilen aufgenommen und über die Umwandlung in Verformungsarbeit abgebaut werden, was die Wucht des Anpralls wesentlich abmildert.

Es besteht vielfach Bedarf, in Abhängigkeit von bestimmten Ereignissen, wie z.B. von Unfällen mit Kraftfahrzeugen, zueinander bewegbar gehaltene Teile mit großer Geschwindigkeit und/oder Beschleunigung relativ zueinander zu bewegen, z.B. um aufprallbedingte Stöße zu dämpfen, sofortige Übergänge in einen anderen Relativzustand von zueinander bewegbaren Teilen zu schaffen und hierdurch Gefahren zu mildem, wie dies z.B. auch beim unfallbedingten Auslösen von Gurtstraffem in Kraftfahrzeugen der Fall ist. So ist es z.B. auch wünschenswert, bei einer Kollision zwischen Personen und Gegenständen, wie z.B. einem Kraftfahrzeug, Betätigungsvorrichtungen vorzusehen, die z.B. die verzögerungsarme Relativverlagerung von Dämpfungselementen oder auch von Verkleidungsteilen des Gegenstandes bzw. Kraftfahrzeuges in eine Auffangposition, d.h. eine veränderte, z. B. vorgelagerte Position, zu stellen, die Personen vor einem unfallbedingt harten Auftreffen auf diese Gegenstände schützt.

So ist es z.B. derzeit aufgrund des beständigen Bestrebens im Kraftfahrzeugbau, Masse einzusparen und die Außenhaut des Fahrzeuges aus verhältnismäßig dünnwandigem Blech aufzubauen, und die Bauräume, z.B. den Motorraum des Kraftfahrzeuges effizient auszunutzen und möglichst klein zu halten, problematisch, eine Person, die bei einem Frontalaufprall in Kontakt mit der Motorhaube gerät, vor weitreichende Verletzungen zu schützen, die sich daraus ergeben, daß der Abstand des Motorblockes von der Motorhaube gering und die Motorhaube selbst nicht hinreichend widerstandsfähig ist, um die Aufprallenergie aufzunehmen. Mit anderen Worten besteht die Gefahr, daß Personen unfallbedingt nach verhältnismäßig geringfügiger Verformung der Motorhaube direkt auf den Widerstand des Motorblockes treffen und sich entsprechende Verletzungen zuziehen.

Eine Betätigungsvorrichtung für ein bewegliches Element der eingangs genannten Art ist beispielsweise aus der DE 39 08 117 A1 bekannt Hierbei wird ein kugelförmiges Sperrelement über einen Federvorspannmechanismus gehalten, der mittels einer Sperrklinke entriegelbar ist.

Weiterhin ist aus der EP 0 761 505 A1 eine Kopplung für ein verlagerbares Sicherheitsteil eines Fahrzeuges, insbesondere für einem Überrollbügel, bekannt, bei dem kugelförmige Sperrelemente über ein federvorbelastetes Halteelement eine Haltestange sperren und die Auslösung des Halteelementes über einen Elektromagneten erfolgen kann. All diesen herkömmlichen Betätigungsvorrichtungen ist gemeinsam, daß die Auslösung nur relativ langsam erfolgen kann bzw. ein hoher Kraft- oder Energieaufwand hierzu erforderlich ist.

Der Erfindung liegt daher die Aufgabe zugrunde, eine Betätigungsvorrichtung der vorgenannten Art derart zu verbessern, daß Relativbewegungen von Teilen zueinander schneller als bisher, insbesondere unverzüglich bewirkt werden können, um so Schutzwirkungen von Teilen, wie z.B. von Verkleidungen im Kraftfahrzeugbereich zu erhöhen.

Für eine Betätigungsvorrichtung der eingangs genannten Art wird diese Aufgabe erfindungsgemäß dadurch gelöst, daß die Energieeinrichtung ein pyrotechnisches Element ist.

Indem ein pyrotechnisches Element vorgesehen wird, um das Auslöseorgan aus der Sperrposition in eine Entsperrposition zu bewegen, können bereits binnen Bruchteilen von Sekunden das beweglich gelagerte Gehäuseteil von dem festen Gehäuseteil gelöst werden, so daß selbst in Extremsituationen, wie beispielsweise bei Unfällen, Karosserieteile oder dergleichen noch rechtzeitig in ihrer Lage verschoben werden können, um so Verletzungen an Insassen oder Passanten zu vermeiden.

Vorzugsweise ist eine solche Betätigungsvorrichtung z.B. zwischen Karosserie und Motorhaube ein- oder mehrfach im Bereich des frontscheibenseitigen Endes der Motorhaube angeordnet und gestattet, vorzugsweise sensorengeschützt ein unfallbedingtes Auslösen derart, daß bei einem Aufprall die Motorhaube schlagartig um einen bestimmten Wert angehoben wird, so daß sich die durch die Motorhaube gebildete "Knautschzone" zum Motorblock deutlich vergrößert und zugleich eine abgefederte Abstützung der Motorhaube ermöglicht ist. Hierdurch können unfallbedingte Verletzungen von Personen drastisch reduziert werden.

Die Erfindung ist aber nicht auf derartige Anwendungen beschränkt, sondern kann überall dort angewandt werden, wo es auf die rasche Neupositionierung von Teilen zueinander in Abhängigkeit von einem schockartig einwirkenden Vorgang oder aber auch in Abhängigkeit vom Vorliegen eines vorbestimmten Sensorsignales ankommt

Vorzugsweise besteht die Betätigungsvorrichtung aus einem Innenzylinder und einem auf diesem gleitbeweglich geführten Außenzylinder, wobei der Innenzylinder an einem stationären Teil und der Außenzylinder an einem relativ zu dem stationären Teil beweglichen Teil angelenkt sind. Die Anordnung kann selbstverständlich auch umgekehrt vorgenommen sein.

Der Außenzylinder stützt sich vorzugsweise gegen den Innenzylinder über eine Vorspannfeder ab und ist an dem Innenzylinder in einer Ruheposition verrastet.

In Abhängigkeit von der Auslösung einer Energieeinrichtung, einem pyrotechnischen Element, kommt es zu einer verzögerungsarmen Verlagerung eines das Verriegelungselement (Sperrelement) zwischen Innen- und Außenzylinder in seiner Sperrposition vorspannenden Auslöseorganes, so daß das Sperrelement bewegt und der Außenzylinder in eine Freigabeposition gebracht wird, in der er zumindest aufgrund der elastischen Federvorspannung gegen den Innenzylinder, vorzugsweise aber unter zusätzlicher Einwirkung der Energieeinrichtung, d.h. der Explosionskraft des pyrotechnischen Elementes unterstützend in seine Endposition gegenüber dem Innenzylinder verlagert wird, wobei die Endbefestigung des Außenzylinders von der Endbefestigung des Innenzylinders einen deutlich vergrößerten Abstand im Vergleich zur verrasteten Ruheposition beider Teile aufweist.

Weitere, bevorzugte Ausgestaltungen des Erfindungsgegenstandes sind in den übrigen Unteransprüchen dargelegt.

Vorzugsweise ist das Auslöseorgan ebenfalls in seine Rastposition elastisch vorgespannt und wird durch die Energieeinrichtung entgegen der Federvorspannung zur Freigabe des Rastelementes betätigt Die Energieeinrichtung, die vorzugsweise eine pyrotechnische Ladung ist, kann auch als Elektromagnet ausgeführt sein, die das metallische, in diesem Fall auch magnetische Auslöseorgan in seine Freigabestellung betätigt, vorzugsweise durch magnetische Anziehung.

Die Betätigungsfeder für den Außenzylinder ist die zwischen Innen- und Außenzylinder angeordnet ist, weist vorzugsweise ein verhältnismäßig weiche Federcharakteristik aus, so daß in der Endposition das Betätigungselement gegen äußere Energieeinwirkung zugleich eine elastische Abfederung schafft.

Gemäß einer vorteilhaften Ausgestaltung der Erfindung besteht die Energieeinrichtung aus einem pyrotechnischen Element, es kann aber auch ein anderes, schlagartig wirksam werdendes Element, wie z.B. ein Elektromagnet verwendet werden. Als Material für das Auslöseorgan wird ein, vorzugsweise magnetisches, Metall benutzt, damit dieses bei Verwendung eines Elektromagneten für die Energieeinrichtung von diesem angezogen werden kann. Im Falle der Verwendung eines pyrotechnischen Elementes wird dieses platzsparend von einem Hohlraum des Auslöseorgans aufgenommen, der dadurch entsteht, daß dieses z.B. hohlkolbenartig und mit einer äußeren Kegelfläche oder Abschnitten verringerten Durchmessers versehen ist.

Ein Endabschnitt des Außenzylinders bildet zweckmäßigerweise einen Innenraum, in dem das Auslöseorgan im Inneren des vorzugsweise als Innenzylinder ausgeführten ersten Gehäuseteils untergebracht ist, um die Betätigungsvorrichtung möglichst kompakt bauen zu können.

Das durch eine Vorspannfeder vorgespannte Auslöseorgan hält durch seine spezielle äußere Form das kugelförmige Sperrelement in seiner Entsperrposition, so daß dieses nach dem Auslösen der Vorrichtung durch Zurückschieben des Außenzylinders auf den Innenzylinder wieder in die halbkugelförmigen Raststellen in der Innenwand der Außenzylinders eingreifen können und die Betätigungsvorrichtung wieder in ihrer Ausgangslage arretierbar ist, z.B. um ein Kraftfahrzeug nach einem Unfall behinderungsfrei in eine Werkstatt zum erneuten "Scharfmachen" der Betätigungsvorrichtung zu verbringen.

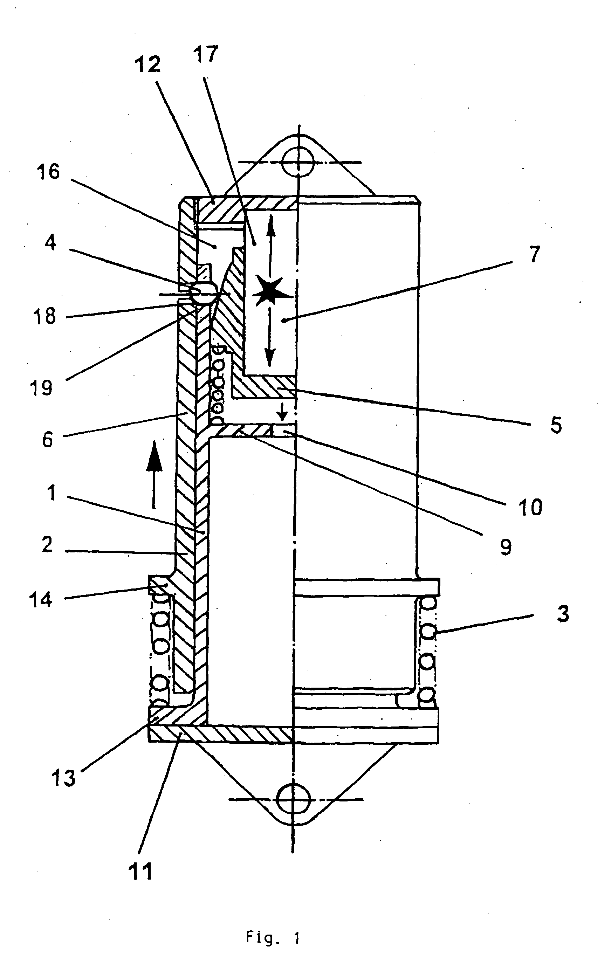

Die Erfindung wird nachfolgend anhand eines Ausführungsbeispieles und einer zugehörigen Zeichnung näher erläutert. In der Zeichnung ist die Betätigungsvorrichtung in schematischer Darstellung in axialem Halbschnitt gezeigt.

Die Betätigungsvorrichtung besteht aus einem Außenzylinder 2, der an einem Ende durch ein Endstück 12 geschlossen ist, und einem Innenzylinder 1, auf dem der Außenzylinder 2 gleitbar gelagert ist. Das Endstück 12 bildet mit dem Außenzylinder 2 und dem Innenzylinder 1 den Innenraum 16 und ist mit einem Befestigungselement (Flanschrohr) versehen. Mit diesem Ende kann der Außenzylinder 2 z.B. mit einer Motorhaube eines Pkw nahe der Frontscheibe fest verbunden sein. Dieser Außenzylinder 2 besitzt zudem eine Umfangsflansch 14 als Lager für eine Betätigungsfeder 3, durch die der Außenzylinder 2 gegen den Innenzylinder 1 vorgespannt ist Der Innenzylinder 1 ist an seinem Ende mit einem Abschlußteil 11 verschlossen, das dem verschlossenen Ende des Außenzylinders 2 gegenüberliegt. Das Abschlußteil 11 schließt gegen den Flansch 13 des Innenzylinders 1.

Eine Öffnung 10 in einer radialen Innenwand 9 verbindet eine erste Kammer 15 mit dem Innenraum 16.

Das Abschlussteil 11 des innenzylinders 1 ist mit einer Befestigungselement (Flanschrohr) versehen, wodurch der Innenzylinder 1 mit dem Rahmen eines Pkw fest verbunden sein kann. Der Außenzylinder 2 und der Innenzylinder 1 sind zueinander verschiebbar gelagert. Damit der Außenzylinder 2 und der Innenzylinder 1 in einer definierten Ruhelage zueinander verharren, ist in die Innenwand des Außenzylinders 2 mindestens eine halbkugelförmige Raststelle 18 eingebracht, in die ein kugelförmiges Sperrelement 4 eingreift. Aufgenommen ist ein Sperrelement 4 in einer Lagerbohrung 19 in der Wand des Innenzylinders 1. Selbstverständlich kann für das Sperrelement, seine Vorspannung in die Sperrposition und seine Aufnahme zur Verrastung zur Innenwand Außenzylinder auch eine andere Konstruktion und Bauweise gewählt werden.

Zwischen einer radialen Innenwand 9 des Innenzylinders 1 und einer unteren Ringfläche des Hohlkolbens 5 (Auslöseorgan) erstreckt sich eine Vorspannfeder 6, die das Auslöseorgan 5 in seine obere Verriegelungsposition vorspannt und so gegen das jeweilige Sperrelement 4 drückt.

Es können auch - in Umfangsrichtung verteilt - mehrere derartiger Rastvorrichtungen mit Sperrelementen 4 zwischen Innen- und Außenzylinder 1,2 angeordnet und durch das Auslöseorgang 5 betätigbar sein.

Das Auslöseorgan 5 besitzt neben einer Anlagefläche für die Vorspannfeder 6 einen zylindrischen Abschnitt, der das Auslöseorgan 5 an der Innenwand des Innenzylinders 1 führt.

Der daran anschließende kegelförmige Abschnitt des Auslöseorgans 5 bewirkt, daß das Sperrelement 4 desto stärker in die dazugehörige Raststelle 18 gedrückt ist, je mehr die Vorspannfeder 6 entspannt ist, und umgekehrt, daß jedes Sperrelement 4 um so weiter geführt nach innen bewegbar ist, je stärker die Vorspannfeder 6 durch das Auslöseorgan 5 vorgespannt ist.

Die Außenkontur des Auslöseorganes 5 ist so gewählt, daß in einer unteren Endposition des hohlkolbenartigen Auslösekörpers 5 diese zwar den Außenzylinder 2 vom Innenzylinder 1 entsperrt, das kugelförmige Sperrelement 4 aber in der Lagerbohrung 19 gehalten bleibt und nicht nach innen fallen kann. Hierdurch wird gewährleistet, daß nach Auslösung der Außenzylinder 2 zurückgedrückt und wieder am Innenzylinder 1 verrastet werden kann.

Das Innere des Auslöseorganes 5 bildet einen zylindrischen Hohlraum 17 zur Aufnahme eines pyrotechnischen Elementes 7 als Beschleunigungseinrichtung (Energieeinrichtung) für das Auslöseorgan 5.

Bei Verwendung eines Elektromagneten 8 als Energieeinrichtung (Alternativlösung zu der Verwendung eines pyrotechnischen Elementes) wird dieser vorzugsweise auf einer radialen Innenwand 9 angebracht, so daß er auf das Auslöseorgan 5 wirken kann und dieses schlagartig zur Freigabe der Rastkugel 4 anzieht.

Wird das pyrotechnische Element 7 gezündet, entsteht in dem Innenraum 16 ein Überdruck, der das Auslöseorgan 5 abwärts entgegen der Wirkung der Vorspannfeder 6 beschleunigt. Somit wird das Sperrelement 4, noch geführt durch das Auslöseorgan 5, nach innen bewegt. Gleichzeitig wird der Außenzylinder 2 freigegeben und unter der Wirkung der Betätigungsfeder 3 und des Explosions-Gasdruckes im Hohlraum 17 uund somit auch eine mit diesem fest verbundene Motorhaube (hier nicht gezeigt) schlagartig nach oben bewegt. Im Zuge dieser Bewegung drückt die Wand des Außenzylinders 2 das Sperrelement 4 nach innen auf das Auslöseorgan 5. Dadurch, daß der Außenzylinder 2 gleichsam die Lagerbohrung 19 des Sperrelementes 4 mit seiner Wandung verschließt, wird das Sperrelement 4 in einer Vorbereitungsposition zur erneuten Verrastung von Außen- und Innenzylinder 2,1 gehalten.

Nachdem die Sprengkraft des pyrotechnischen Elementes 7 den Außenzylinder 2 mit der Motorhaube unter Überwindung des erheblichen Ruhe-Trägheitsmomentes des Systemes aus Außenzylinder 2 und Motorhaube aus der Ruhelage in Bewegung gebracht hat, führt nun die vorgespannte Betätigungsfeder 3 diese Bewegung weiter, indem sie sich entspannt, wobei die Betätigungsfeder 3 dafür sorgt, daß der Außenzylinder 2 sich nur soweit gegenüber dem Innenzylinder 1 verschieben kann, daß die Wand des Außenzylinders 2 noch die Lagerbohrung 19 eines jeden Sperrelements 4 verdeckt

Der Außenzylinder 2 wird nun mit der Motorhaube von der Betätigungsfeder 3 in seiner Endposition gehalten und stellt wegen deren relativ weichen Federkennlinie kein starres Hindernis dar. Nun hat die Motorhaube genügend Abstand zu dem darunterliegenden Motor und die Wucht des Aufpralls der unfallbeteiligte Person kann von der Motorhaube aufgenommen werden, ohne die Person mit dem Motor in (indirekten) Kontakt treten zu lassen.

Wegen der relativ weichen Charakteristik der Betätigungsfeder 3 läßt sich der Außenzylinder 2 auch wieder leicht auf den Innenzylinder 1 zurückschieben.
Wieder in seiner Ausgangsposition angelangt, rastet ein jedes Sperrelement 4 wieder in seiner dazugehörigen Raststelle 18 ein und arretiert die Betätigungsvorrichtung wieder in seiner Ausgangsposition. Auf diese Weise wäre ein Pkw nach einem solchen oben beschriebenen Unfall wieder fahrbereit, zumindest was die Beseitigung der Sichtbehinderung durch die zu Beginn dieses Unfalls nach oben angestellte Motorhaube angeht

## Patentansprüche

1. Betätigungsvorrichtung für ein bewegliches Element mit einem ersten Gehäuseteil (1) und einem an diesem beweglich gelagerten zweiten Gehäuseteil (2), das in einer Ruhelage durch ein Sperrelement (4) entgegen einer Vorspannung an dem ersten Gehäuseteil (1) gehalten ist, wobei das Sperrelement (4) von einem Auslöseorgan (5) in seiner Sperrposition vorgespannt ist, und das Auslöseorgan (5) in dem zweiten Gehäuseteil (2) aufgenommen wird und durch eine Energieeinrichtung (7) aus der Sperrposition in eine das zweite Gehäuseteil (2) freigebende Entsperrposition bewegbar ist, **dadurch gekennzeichnet, daß** die Energieeinrichtung ein pyrotechnisches Element ist

2. Betätigungsvorrichtung nach Anspruch 1, **dadurch gekennzeichnet, daß** das erste Gehäuseteil einen Innenzylinder (1) bildet.

3. Betätigungsvorrichtung nach Anspruch 1 oder 2, **dadurch gekennzeichnet, daß** das zweite Gehäuseteil einen Außenzylinder (2) bildet, der koaxial zu dem Innenzylinder (1) und auf diesem gleitverschieblich gelagert ist.

4. Betätigungsvorrichtung nach zumindest einem der vorhergehenden Ansprüche 1 bis 3, **dadurch gekennzeichnet, daß** das Auslöseorgan (5) ein insbesondere metallischer Hohlkolben ist.

5. Betätigungsvorrichtung nach Anspruch 4, **dadurch gekennzeichnet, daß** der Hohlkolben einseitig offen ist.

6. Betätigungsvorrichtung nach Anspruch 4 oder 5, **dadurch gekennzeichnet, daß** das pyrotechnische Element (7) in einem Hohlraum (17) des Auslöseorgans (5) aufgenommen ist.

7. Betätigungsvorrichtung nach zumindest einem der Ansprüche 1 bis 6, **dadurch gekennzeichnet, daß** an einem Endbereich des Innenzylinders (1) ein radial vorspringender Flansch (13) vorgesehen ist

8. Betätigungsvorrichtung nach zumindest einem der Ansprüche 1 bis 7, **dadurch gekennzeichnet, daß** innerhalb des Innenzylinders (1) eine, insbesondere eine Öffnung (10) aufweisende, radiale Innenwand (9) vorgesehen ist.

9. Betätigungsvorrichtung nach zumindest einem der Ansprüche 1 bis 8, **dadurch gekennzeichnet, daß** in Verbindung mit dem Flansch (13) ein Abschlussteil (11) an dem Innenzylinder (1) vorgesehen ist.

10. Betätigungsvorrichtung nach Anspruch 9, **dadurch gekennzeichnet, daß** an dem Abschlußteil (11) ein Befestigungselement ausgebildet ist.

11. Betätigungsvorrichtung nach zumindest einem der Ansprüche 1 bis 10, **dadurch gekennzeichnet, daß** der Außenzylinder (2) einen Umfangsflansch (14) aufweist, der opponierend zu dem radial vorspringenden Flansch (13) des Innenzylinders (1) angeordnet ist.

12. Betätigungsvorrichtung nach zumindest einem der Ansprüche 1 bis 11, **dadurch gekennzeichnet, daß** der Außenzylinder (2) mit einem Endstück (12) verschlossen ist und mit diesem einen Innenraum (16) des Innenzylinders (1) begrenzt.

13. Betätigungsvorrichtung nach Anspruch 12, **dadurch gekennzeichnet, daß** sich an dem Endstück (12) ein Befestigungselement befindet.

14. Betätigungsvorrichtung nach zumindest einem der vorhergehenden Ansprüche 1 bis 13, **dadurch gekennzeichnet, daß** der Außenzylinder (2) mittels einer Federeinrichtung (3) gegen den Innenzylinder (1) vorgespannt ist

15. Betätigungsvorrichtung nach Anspruch 14, **dadurch gekennzeichnet, daß** die Federeinrichtung eine einzelne koaxial mit den beiden zylindrischen Gehäuseteilen angeordnete schraubenförmige Betätigungsfeder (3) ist, die zwischen dem Flansch (13) des Innenzylinders (1) und dem Umfangsflansch (14) des Außenzylinders (2) eingespannt ist

16. Betätigungsvorrichtung nach zumindest einem der Ansprüche 14 und 15, **dadurch gekennzeichnet, daß** die Betätigungsfeder (3) eine relativ weiche Charakteristik (Federkennlinie) aufweist.

17. Betätigungsvorrichtung nach zumindest einem der vorhergehenden Ansprüche 1 bis 6, **dadurch gekennzeichnet, daß** ein Sperrelement (4) kugelförmig ausgebildet ist.

18. Betätigungsvorrichtung nach zumindest einem der vorhergehenden Ansprüche 1 bis 7, **dadurch gekennzeichnet, daß** das Auslöseorgan (5) mit einem federelastischen Element (6) in die Sperrposition vorgespannt ist.

19. Betätigungsvorrichtung nach Anspruch 18, **dadurch gekennzeichnet, daß** das federelastische Element eine einzelne koaxial mit den beiden zylindrischen Gehäuseteilen (1 bzw. 2) angeordnete schraubenförmige Vorspannfeder (6) ist, die zwischen einer Innenwand (9) des Innenzylinders (1) und einer Anlagefläche des Auslöseorgans (5) eingespannt ist.

## Claims

1. Actuating device for a movable element with a first housing part (1) and, movably mounted to this, a second housing part (2) which is held in a rest position against a bias to the first housing part (1) by a blocking element (4), wherein the blocking element (4) is biased in its blocked position by a release organ (5), and the release organ (5) resides in the second housing part (2) and is movable by an energy unit (7) out of the blocked position into an unblocked position uncovering the second housing part (2), **characterized in that** the energy unit is a pyrotechnic element.

2. Actuating device according to claim 1, **characterized in that** the first housing part forms an inner cylinder (1).

3. Actuating device according to claim 1 or 2, **characterized in that** the second housing part forms an outer cylinder (2) which is mounted coaxially on the outer cylinder (2) in relation to the inner cylinder (1) so as to be slidingly shiftable.

4. Actuating device according to at least one of the previous claims 1 to 3, **characterized in that** the release organ (5) is a hollow piston which is in particular metallic.

5. Actuating device according to claim 4, **characterized in that** the hollow piston is open on one side.

6. Actuating device according to claim 4 or 5, **characterized in that** the pyrotechnic element (7) resides in a hollow space (17) of the release organ (5).

7. Actuating device according to at least one of the claims 1 to 6, **characterized in that** a radially protruding flange (13) is provided at one end region of the inner cylinder (1).

8. Actuating device according to at least one of the claims 1 to 7, **characterized in that** a radial inner wall (9), in particular a radial inner wall (9) having an opening (10), is provided inside the inner cylinder (1).

9. Actuating device according to at least one of the claims 1 to 8, **characterized in that** a termination part (11) is provided, in connection with the flange (13), on the inner cylinder (1).

10. Actuating device according to claim 9, **characterized in that** a fixing element is formed on the termination part (11).

11. Actuating device according to at least one of the claims 1 to 10, **characterized in that** the outer cylinder (2) comprises a circumferential flange (14) which is disposed in an opposable manner to the radially protruding flange (13) of the inner cylinder (1).

12. Actuating device according to at least one of the claims 1 to 11, **characterized in that** the outer cylinder (2) is closed off with an end piece (12) and, with this, defines an interior area (16) of the inner cylinder (1).

13. Actuating device according to claim 12, **characterized in that** a fixing element is located on the end piece (12).

14. Actuating device according to at least one of the previous claims 1 to 13, **characterized in that** the outer cylinder (2) is biased by means of a spring unit (3) against the inner cylinder (1).

15. Actuating device according to claim 14, **characterized in that** the spring unit is a single screw shaped actuating spring (3) which is coaxially disposed in relation to both of the cylindrical housing parts, said actuating spring (3) being engaged between the flange (13) of the inner cylinder (1) and the circumferential flange (14) of the outer cylinder (2).

16. Actuating device according to at least one of the claims 14 and 15, **characterized in that** the actuating spring (3) has a relatively soft characteristic (spring characteristic).

17. Actuating device according to at least one of the previous claims 1 to 6, **characterized in that** a blocking element (4) is spherically shaped.

18. Actuating device according to at least one of previous claims 1 to 7, **characterized in that** the release organ (5) is biased in the blocked position with a spring-elastic element (6).

19. Actuating device according to claim 18, **characterized in that** the spring-elastic element is a single screw shaped biasing spring (6) which is coaxially disposed in relation to both of the cylindrical housing parts (1 resp. 2), said biasing spring (6) being engaged between an inner wall (9) of the inner cylinder (1) and a contact surface of the release organ (5).

## Revendications

1. Dispositif d'actionnement pour un élément mobile avec un premier élément de boîtier (1) et un second élément de boîtier (2) qui est monté mobile sur celui-ci et qui est maintenu dans une position de repos sur le premier élément de boîtier (1) par un élément de blocage (4) à l'encontre d'une contrainte initiale, l'élément de blocage (4) étant soumis à une contrainte initiale, dans sa position de repos, par un organe de déclenchement (5) et ledit organe de déclenchement (5) étant logé dans le second élément de boîtier (2) et étant apte à être amené par un dispositif d'énergie (7) de la position de blocage à une position de déblocage qui libère le second élément de boîtier (2),
**caractérisé en ce que** le dispositif d'énergie est constitué par un élément pyrotechnique.

2. Dispositif d'actionnement selon la revendication 1, **caractérisé en ce que** le premier élément de boîtier forme un cylindre intérieur (1).

3. Dispositif d'actionnement selon la revendication 1 ou 2, **caractérisé en ce que** le second élément de boîtier forme un cylindre extérieur (2) qui est monté coaxialement par rapport au cylindre intérieur (1) et de manière à pouvoir glisser sur celui-ci.

4. Dispositif d'actionnement selon l'une au moins des revendications précédentes 1 à 3, **caractérisé en ce que** l'organe de déclenchement (5) est constitué par un piston creux métallique, en particulier.

5. Dispositif d'actionnement selon la revendication 4, **caractérisé en ce que** le piston creux est ouvert d'un côté.

6. Dispositif d'actionnement selon la revendication 4 ou 5, **caractérisé en ce que** l'élément pyrotechnique (7) est logé dans une cavité (17) de l'organe de déclenchement (5).

7. Dispositif d'actionnement selon l'une au moins des revendications 1 à 6, **caractérisé en ce qu'**il est prévu sur une zone d'extrémité du cylindre intérieur (1) une bride (13) saillant radialement.

8. Dispositif d'actionnement selon l'une des revendications 1 à 7, **caractérisé en ce qu'**il est prévu à l'intérieur du cylindre intérieur (1) une paroi intérieure radiale (9) qui présente en particulier une ouverture (10).

9. Dispositif d'actionnement selon l'une des revendications 1 à 8, **caractérisé en ce qu'**il est prévu avec la bride (13) un élément d'obturation (11) sur le cylindre intérieur (1).

10. Dispositif d'actionnement selon la revendication 9, **caractérisé en ce qu'**un élément de fixation est formé sur l'élément d'obturation (11).

11. Dispositif d'actionnement selon l'une au moins des revendications 1 à 10, **caractérisé en ce que** le cylindre extérieur (2) présente une bride circulaire (14) qui est disposée à l'opposé de la bride (13) saillant radialement du cylindre intérieur (1).

12. Dispositif d'actionnement selon l'une au moins des revendications 1 à 11, **caractérisé en ce que** le cylindre extérieur (2) est fermé à l'aide d'une pièce d'extrémité (12) et délimite avec celle-ci un espace intérieur (16) du cylindre intérieur (1).

13. Dispositif d'actionnement selon la revendication 12, **caractérisé en ce qu'**un élément de fixation se trouve sur la pièce d'extrémité (12).

14. Dispositif d'actionnement selon l'une au moins des revendications précédentes 1 à 13, **caractérisé en ce que** le cylindre extérieur (2) est soumis grâce à un dispositif à ressort (3) à une contrainte initiale dirigée vers le cylindre intérieur (1).

15. Dispositif d'actionnement selon la revendication 14, **caractérisé en ce que** le dispositif à ressort est constitué par un ressort d'actionnement hélicoïdal individuel (3) qui est disposé coaxialement par rapport aux deux éléments de boîtier cylindriques et qui est serré entre la bride (13) du cylindre intérieur (1) et la bride circulaire (14) du cylindre extérieur (2).

16. Dispositif d'actionnement selon l'une au moins des revendications 14 et 15, **caractérisé en ce que** le ressort d'actionnement (3) présente une courbe caractéristique (courbe caractéristique de ressort) relativement souple.

17. Dispositif d'actionnement selon l'une au moins des revendications précédentes 1 à 6, **caractérisé en ce qu'**un élément de blocage (4) a la forme d'une bille.

18. Dispositif d'actionnement selon l'une au moins des revendications précédentes 1 à 7, **caractérisé en ce que** l'organe de déclenchement (5) est soumis grâce à un élément élastique (6) à une contrainte initiale dirigée vers la position de blocage.

19. Dispositif d'actionnement selon la revendication 18, **caractérisé en ce que** l'élément élastique est constitué par un ressort hélicoïdal individuel de contrainte initiale (6) qui est disposé coaxialement par rapport aux deux éléments de boîtier cylindriques (1, 2) et qui est serré entre une paroi intérieure (9) du cylindre intérieur (1) et une surface d'appui de l'organe de déclenchement (5)
